# EUROPÄISCHE PATENTSCHRIFT

(11) **EP 0 749 985 B1**
(45) Veröffentlichungstag und Bekanntmachung des Hinweises auf die Patenterteilung: **22.09.2004**
(21) Anmeldenummer: 96109351.5
(22) Anmeldetag: 12.06.1996
(51) Int. Cl.: C08F 4/642, C08F 10/00, C07F 17/00

(54) **Stereorigide Metallocenverbindung**
Stereo rigid metallocene compounds
Composés de métallocène stéréo rigides

(30) Priorität: 19.06.1995 DE 19522105
(43) Veröffentlichungstag der Anmeldung: 27.12.1996
(73) Patentinhaber: Ticona GmbH, 65444 Kelsterbach (DE)
(72) Erfinder: Aulbach, Michael, Dr., 65719 Hofheim (DE); Küber, Frank, Dr., 61440 Oberursel (DE); Riedel, Michael, Dr., 60529 Frankfurt (DE); Helmer-Metzmann, Freddy, Dr., 55270 Essenheim (DE)

(56) Entgegenhaltungen:
- EP-A- 0 659 758
- EP-A- 0 661 300
- CHEMISCHE BERICHTE, Bd. 127, Nr. 8 , August 1994, Seiten 1551-1553, XP002028077 ERKER, G., PSIORZ, C., KRUGER, C., NOLTE, M.: "Synthesis of a Novel Annulated C1-bridged ansa-Metallocene System"

## Beschreibung

Die vorliegende Erfindung betrifft eine spezielle stereorigide Metallocenverbindung sowie ein Verfahren zur Herstellung von Polyolefinen in Gegenwart dieser speziellen stereorigiden Metallocenverbindung.

Aus der Literatur ist die Herstellung von Polyolefinen mit löslichen Metallocenverbindungen in Kombination mit Aluminoxanen oder anderen Cokatalysatoren, die aufgrund ihrer Lewis-Acidität das neutrale Metallocen in ein Kation überführen und stabilisieren können, bekannt (EP 129 368, EP 351 392).

Im Tagungsband der 1st Journal of Organometallic Chemistry Conference on Applied Organometallic Chemistry, Seite 136 werden Metallocene beschrieben, welche einen substituierten tricyclischen Kohlenwasserstoff als Ligandsystem aufweisen.

Bei Einsatz löslicher Metallocenverbindungen auf der Basis von Bis(cyclopentadienyl)zirkon-dialkyl bzw. -dihalogenid in Kombination mit oligomeren Aluminoxanen erhält man ataktische Polymere, die wegen ihrer unausgewogenen und ungenügenden Produkteigenschaften technisch nur von geringer Bedeutung sind. Außerdem sind bestimmte Olefincopolymere nicht zugänglich.

Derivate des Zirkonocendichlorids, in denen die beiden substituierten Cyclopentadienylgruppen über eine Methylen-, Ethylen- oder eine Dimethylsilylenbrücke miteinander verbunden sind, können aufgrund ihrer konformativen Starrheit als Katalysatoren zur isospezifischen Polymerisation von Olefinen benutzt werden (Chem. Lett. 1989, S. 1853 bis 1856 oder EP-A 0 316 155). Besondere Bedeutung besitzen Metallocene mit (substituierten) Indenylresten als Liganden zur Herstellung hochisotaktischer Polymere mit hoher Kristallinität und hohem Schmelzpunkt (EP 485 823, EP 530 647).

Von großem Interesse sind auch Polyolefine, die in ihrem Eigenschaftsprofil zwischen diesen beiden Extremen liegen.

Es bestand die Aufgabe, eine Metallocenverbindung zur Verfügung zu stellen, welche die Nachteile des Standes der Technik vermeidet und sich zur Herstellung von Polyolefinen eignet.

Die vorliegende Erfindung betrifft somit eine stereorigide Metallocenverbindung durch Patentanspruch 1, deren bevorzugte Ausgestaltungen in den Unteransprüchen 2 bis 7 umschrieben sind.

Bei der Bestimmung der Anzahl der Ringatome des verbindenden Fünfrings werden diejenigen Kohlenstoffatome der an den verbindenden Fünfring anellierten Cyclopentadienylgruppe mitgezählt, welche aufgrund der Anellierung Teile des verbindenden Fünfrings sind. Mögliche Substituenten an dem verbindenden Fünfring werden hierbei nicht mitgezählt.

Erfindungsgemäß befindet sich eine Cyclopentadienylgruppe als Substituent an dem verbindenden Fünfring (d. h. die Cyclopentadienylgruppe ist über eine kovalente Bindung an den verbindenden Fünfring gebunden), während eine weitere Cyclopentadienylgruppe an den verbindenden Fünfring anelliert ist. Die an den verbindenden Fünfring anellierte Cyclopentadienylgruppe ist erfindungsgemäß unsubstituiert.

Substituierte Cyclopentadienylgruppen tragen bevorzugt einen oder mehrere C₁-C₃₀-kohlenstoffhaltige Reste wie C₁-C₁₀-Alkyl, C₆-C₂₀-Aryl (z.B. Phenyl oder Naphthyl) oder zwei oder mehr der C₁-C₃₀-kohlenstoffhaltigen Reste bilden ein Ringsystem.

Beispiele für substituierte Cyclopentadienylgruppen sind Methylcyclopentadienyl, methyl-tert.-butylcyclopentadienyl, tert.-Butylcycloepentadienyl, Isopropylcyclopentadienyl, Dimethylcyclopentadienyl, Trimethylethylcyclopentadienyl, Phenylcyclopentadienyl, Diphenylcyclopentadienyl, Indenyl, Methylindenyl, Ethylindenyl, tert.-Butylindenyl, Trimethylsilylindenyl, Methyl-phenylindenyl, Ethyl-phenylindenyl, Methyl-naphthyl-indenyl, Methyl-iso-propyl-indenyl, Benzoindenyl, Methyl-4,5-benzoindenyl, Methyl-α-acenaphthindenyl, Methyl-di-iso-propylindenyl, Fluorenyl, Methylfluorenyl oder Di-tert.-butylfluorenyl.

Der verbindende Fünfring ist bevorzugt aliphatisch. Der verbindende Fünfring kann auch Substituenten wie C₁-C₄₀-kohlenstoffhaltige Gruppen (z.B. C₁-C₁₀-Alkyl oder C₆-C₂₀-Aryl) tragen.

Die erfindungsgemäße stereorigide Metallocenverbindung hat die Formel I 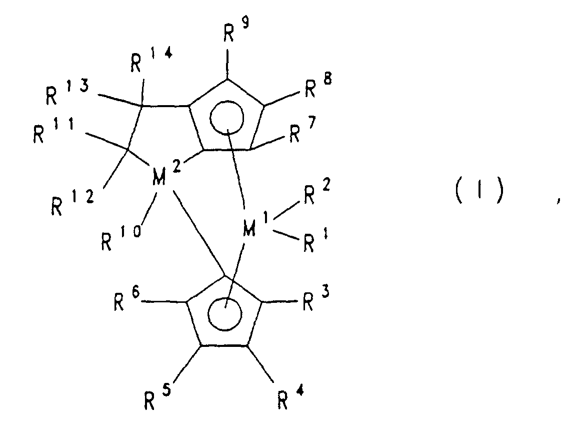 worin
- M¹: Titan, Zirkonium oder Hafnium, insbesondere Zirkonium ist,
- R¹ und R²: gleich sind und eine C₁-C₄-Alkylgruppe oder ein Halogenatom wie Fluor, Chlor, Brom oder Jod, insbesondere Chlor bedeuten,
- R³, R⁴, R⁵ und R⁶,: gleich oder verschieden sind und ein Wasserstoffatom, eine C₁-C₁₀-Alkylgruppe oder eine C₆-C₂₄-Arylgruppe sind, oder zwei oder mehr benachbarte Reste R³, R⁴, R⁵ und R⁶, zusammen mit den sie verbindenden Atomen ein aromatisches oder aliphatisches kohlenstoffhaltiges Ringsystem mit 4 bis 20 Kohlenstoffatomen bilden,
- R⁷, R⁸ und R⁹: gleich Wasserstoff sind,
- R¹⁰: ein Wasserstoffatom, eine C₆-C₂₄-Arylgruppe oder eine C₁-C₁₀-Alkylgruppe, insbesondere C₁-C₄-Alkylgruppe ist,
- M²: Kohlenstoff ist,
- R¹¹ und R¹²: gleich oder verschieden sind, und R¹¹ ein Wasserstoffatom, eine C₁-C₄-Alkylgruppe oder eine C₆-C₁₀-Arylgruppe und R¹² ein Wasserstoffatom sind und
- R¹³ und R¹⁴: gleich oder verschieden sind und ein Wasserstoffatom, eine C₁-C₄-Alkylgruppe oder eine C₆-C₁₀-Arylgruppe bedeuten und mindestens einer der Reste R³, R⁵ und R⁶, von Wasserstoff verschieden ist.

Besonders bevorzugt sind Verbindungen der Formel I, worin
M¹ Zirkonium ist,
R¹ und R² gleich sind und ein Halogenatom, insbesondere Chlor bedeuten,
R³, R⁴, R⁵ und R⁶, gleich oder verschieden sind und ein Wasserstoffatom oder eine C₁-C₄-Alkylgruppe wie Methyl, Ethyl, Propyl, Isopropyl, Butyl oder Isobutyl oder eine C₆-C₁₄-Arylgruppe wie Phenyl oder Naphtyl bedeuten, oder R³ und R⁴ und/oder R⁵ und R⁶ zusammen mit den sie verbindenden Atomen ein aromatisches Kohlenwasserstoffringsystem mit 4 bis 20 Kohlenstoffatomen bilden, insbesondere einen Sechsring, der seinerseits substituiert sein kann,
R⁷, R⁸ und R⁹ Wasserstoffatom sind.
M² ein Kohlenstoffatom ist,
R¹⁰ ein Wasserstoffatom, eine C₁-C₆-Alkylgruppe, insbesondere Methyl, oder eine C₆-C₁₀-Arylgruppe, insbesondere Phenyl ist,
R¹¹ und R¹² gleich sind und ein Wasserstoffatom bedeuten und
R¹³ und R¹⁴ gleich oder verschieden sind und eine Methyl- oder eine Phenylgruppe bedeuten.

Beispiele für erfindungsgemäße Metallocenverbindungen sind:
[4-(η⁵-Indenyl)(η⁵-4,5-tetrahydropentalen)]-dichlorotitan
[4-(η⁵-Indenyl)(η⁵-4,5-tetrahydropentalen)]-dichlorozirconium
[4-(η⁵-Indenyl)(η⁵-4,5-tetrahydropentalen)]-dichlorohafnium

[4-(η⁵-Indenyl)-4-methyl-(η⁵-4,5-tetrahydropentalen)]-dichlorozirconium
[4-(η⁵-Indenyl)-4-phenyl-(η⁵-4,5-tetrahydropentalen)]-dichlorozirconium

[4-(η⁵-Indenyl)-6-methyl-6-phenyl-(η⁵-4,5-tetrahydropentalen)]-dichlorozirconium
[4-(η⁵-Indenyl)-4,6-dimethyl-6-phenyl-(η⁵-4,5-tetrahydropentalen)]-dichlorozirconium
[4-(η⁵-Indenyl)-4-phenyl-6-methyl-6-phenyl-(η⁵-4,5-tetrahydropentalen)]-dichlorozirconium

[4-(η⁵-Indenyl)-6,6-diphenyl-(η⁵-4,5-tetrahydropentalen)]-dichlorozirconium
[4-(η⁵-Indenyl)-4-methyl-6,6-diphenyl-(η⁵-4,5-tetrahydropentalen)]-dichlorozirconium
[4-(η⁵-Indenyl)-4,6,6-triphenyl-(η⁵-4,5-tetrahydropentalen)]-dichlorozirconium

[4-(η⁵-Indenyl)-6,6-dimethyl-(η⁵-4,5-tetrahydropentalen)]-dichlorozirconium
[4-(η⁵-Indenyl)-4-ethyl-6,6-dimethyl-(η-4,5-tetrahydropentalen)]-dichlorozirconium
[4-(η⁵-Indenyl)-4-phenyl-6,6-dimethyl-(η⁵-4,5-tetrahydropentalen)]-dichlorozirconium

[4-(η⁵-Indenyl)-6-methyl-(η⁵-4,5-tetrahydropentalen)]-dichlorozirconium
[4-(η⁵-Indenyl)-6-ethyl-(η⁵-4,5-tetrahydropentalen)]-dichlorozirconium
[4-(η⁵-Indenyl)-6-phenyl-(η⁵-4,5-tetrahydropentalen)]-dichlorozirconium

[4-(η⁵-Indenyl)-4,6-dimethyl-(η⁵-4,5-tetrahydropentalen)]-dichlorozirconium
[4-(η⁵-Indenyl)-4-phenyl-6-methyl-(η⁵-4,5-tetrahydropentalen)]-dichlorozirconium

[4-(η⁵-Indenyl)-4-methyl-6-phenyl-(η⁵-4,5-tetrahydropentalen))-dichlorozirconium
[4-(η⁵-Indenyl)-4-phenyl-6-phenyl-(η⁵-4,5-tetrahydropentalen)]-dichlorozirconium
[4-(η⁵-Fluorenyl)(η⁵-4,5-tetrahydropentalen)]-dichlorotitan
[4-(η⁵-Fluorenyl)(η⁵-4,5-tetrahydropentalen)]-dichlorozirconium
[4-(η⁵-Fluorenyl)(η⁵-4,5-tetrahydropentalen)]-dichlorohafnium

[4-(η⁵-Fluorenyl)-4-methyl-(η⁵-4,5-tetrahydropentalen)]-dichlorozirconium
[4-(η⁵-Fluorenyl)-4-phenyl-(η⁵-4,5-tetrahydropentalen)]-dichlorozirconium

[4-(η⁵-Fluorenyl)-6-methyl-6-phenyl-(η⁵-4,5-tetrahydropentalen)]-dichlorozirconium
[4-(η⁵-Fluorenyl)-4,6-dimethyl-6-phenyl-(η⁵-4,5-tetrahydropentalen)]-dichlorozirconium
[4-(η⁵-Fluorenyl)-4-phenyl-6-methyl-6-phenyl-(η⁵-4,5-tetrahydropentalen)]-dichlorozirconium

[4-(η⁵-Fluorenyl)-6,6-diphenyl-(η⁵-4,5-tetrahydropentalen)]-dichlorozirconium
[4-(η⁵-Fluorenyl)-4-methyl-6,6-diphenyl-(η⁵-4,5-tetrahydropentalen)]-dichlorozirconium
[4-(η⁵-Fluorenyl)-4,6,6-triphenyl-(η⁵-4,5-tetrahydropentalen)]-dichlorozirconium

[4-(η⁵-Fluorenyl)-6,6-dimethyl-(η⁵-4,5-tetrahydropentaten)]-dichlorozirconium
[4-(η⁵-Fluorenyl)-4-phenyl-6,6-dimethyl-(η⁵-4,5-tetrahydropentalen)]-dichlorozirconium

[4-(η⁵-Fluorenyl)-6-methyl-(η⁵-4,5-tetrahydropentalen)]-dichlorozirconium
[4-(η⁵-Fluorenyl)-6-phenyl-(η⁵-4,5-tetrahydropentalen)]-dichlorozirconium

[4-(η⁵-Fluorenyl)-4,6-dimethyl-(η⁵-4,5-tetrahydropentalen)]-dichlorozirconium
[4-(η⁵-Fluorenyl)-4-phenyl-6-methyl-(η⁵-4,5-tetrahydropentalen)]-dichlorozirconium
[4-(η⁵-Fluorenyl)-4-methyl-6-phenyl-(η⁵-4,5-tetrahydropentalen)]-dichlorozirconium
[4-(η⁵-Fluorenyl)-4-phenyl-6-phenyl-(η⁵-4,5-tetrahydropentalen)]-dichlorozirconium

[4-(η⁵-3,5,6,7-tetrahydroindenyl)(η⁵-4,5-tetrahydropentalen)]-dichlorotitan
[4-(η⁵-4,5,6,7-tetrahydroindenyl)(η⁵-4,5-tetrahydropentalen)]-dichlorozirconium
[4-(η⁵-4,5,6,7-tetrahydroindenyl)(η⁵-4,5-tetrahydropentalen)]-dichlorohafnium

[4-(η⁵-4,5,6,7-tetrahydroindenyl)-4-methyl-(η⁵-4,5-tetrahydropentalen)]-dichlorozirconium
[4-(η⁵-4,5,6,7-tetrahydroindenyl)-4-phenyl-(η⁵-4,5-tetrahydropentalen)]-dichlorozirconium

[4-(η⁵-4,5,6,7-tetrahydroindenyl)-6-methyl-6-phenyl-(η⁵-4,5-tetrahydropentalen)]-dichlorozirconium
[4-(η⁵-4,5,6,7-tetrahydroindenyl)-4,6-dimethyl-6-phenyl-(η⁵-4,5-tetrahydropentalen)]-dichlorozirconium
[4-(η⁵-4,5,6,7-tetrahydroindenyl)-4-phenyl-6-methyl-6-phenyl-(η⁵-4,5-tetrahydropentalen)]-dichlorozirconium

[4-(η⁵-4,5,6,7-tetrahydroindenyl)-6,6-diphenyl-(η⁵-4,5-tetrahydropentalen)]-dichlorozirconium
[4-(η⁵-4,5,6,7-tetrahydroindenyl)-4-methyl-6,6-diphenyl-(η⁵-4,5-tetrahydropentalen)]-dichlorozirconium
[4-(η⁵-4,5,6,7-tetrahydroindenyl)-4,6,6-triphenyl-(η⁵-4,5-tetrahydropentalen)]-dichlorozirconium

[4-(η⁵-4,5,6,7-tetrahydroindenyl)-6,6-dimethyl-(η⁵-4,5-tetrahydropentalen)]-dichlorozirconium
[4-(η⁵-4,5,6,7-tetrahydroindenyl)-4-ethyl-6,6-dimethyl-(η⁵-4,5-tetrahydropentalen)]-dichlorozirconium
[4-(η⁵-4,5,6,7-tetrahydroindenyl)-4-phenyl-6,6-dimethyl-(η⁵-4,5-tetrahydropentalen)]-dichlorozirconium

[4-(η⁵-4,5,6,7-tetrahydroindenyl)-6-methyl-(η⁵-4,5-tetrahydropentalen)]-dichlorozirconium
[4-(η⁵-4,5,6,7-tetrahydroindenyl)-6-phenyl-(η⁵-4,5-tetrahydropentalen)]-dichlorozirconium

[4-(η⁵-4,5,6,7-tetrahydroindenyl)-4,6-dimethyl-(η⁵-4,5-tetrahydropentalen)]-dichlorozirconium
[4-(η⁵-4,5,6,7-tetrahydroindenyl)-4-phenyl-6-methyl-(η⁵-4,5-tetrahydropentalen)]-dichlorozirconium

[4-(η⁵-4,5,6,7-tetrahydroindenyl)-4-methyl-6-phenyl-(η⁵-4,5-tetrahydropentalen)]-dichlorozirconium
[4-(η⁵-4,5,6,7-tetrahydroindenyl)-4-phenyl-6-phenyl-(η⁵-4,5-tetrahydropentalen)]-dichlorozirconium

[4-(η⁵-3'-Methyl-cyclopentadienyl)-(η⁵-4,5-tetrahydropentalen)]-dichlorozirconium
[4-(η⁵-3'-isopropyl-cyclopentadienyl)-(η⁵-4,5-tetrahydropentalen)]-dichlorozirconium
[4-(η⁵-3'-Benzyl-cyclopentadienyl)-(η⁵-4,5-tetrahydropentalen)]-dichlorozirconium

[4-(η⁵-3'-Methyl-cyclopentadienyl)-4-methyl-(η⁵-4,5-tetrahydropentalen)]-dichlorozirconium
[4-(η⁵-3'-isopropyl-cyclopentadienyl)-4-methyl-(η⁵-4,5-tetrahydropentalen)]-dichlorozirconium
[4-(η⁵-3'-Benzyl-cyclopentadienyl)-4-methyl-(η⁵-4,5-tetrahydropentalen)]-dichlorozirconium

[4-(η⁵-3'-Methyl-cyclopentadienyl)-4-phenyl-(η⁵-4,5-tetrahydropentalen)]-dichlorozirconium
[4-(η⁵-3'-isopropyl-cyclopentadienyl)-4-phenyl-(η⁵-4,5-tetrahydropentalen)]-dichlorozirconium
[4-(η⁵-3'-Benzyl-cyclopentadienyl)-4-phenyl-(η⁵-4,5-tetrahydropentalen)]-dichlorozirconium

[4-(η⁵-3'-Methyl-cyclopentadienyl)-4,6-dimethyl-(η⁵-4,5-tetrahydropentalen)]-dichlorozirconium
[4-(η⁵-3'-isopropyl-cyclopentadienyl)-4,6-dimethyl-(η⁵-4,5-tetrahydropentalen)]-dichlorozirconium
[4-(η⁵-3'-Benzyl-cyclopentadienyl)-4,6-dimethyl-(η⁵-4,5-tetrahydropentalen)]-dichlorozirconium

[4-(η⁵-3'-Methyl-cyclopentadienyl)-4-methyl-6-phenyl-(η⁵-4,5-tetrahydropentalen)]-dichlorozirconium
[4-(η⁵-3'-isopropyl-cyclopentadienyl)-4-methyl-6-phenyl-(η⁵-4,5-tetrahydropentalen)]-dichlorozirconium
[4-(η⁵-3'-Benzyl-cyclopentadienyl]-4-methyl-6-phenyl-(η⁵-4,5-tetrahydropentalen)]-dichlorozirconium

[4-(η⁵-3'-Methyl-cyclopentadienyl)-4,6-dimethyl-6-phenyl-(η⁵-4,5-tetrahydropentalen)]-dichlorozirconium
[4-(η⁵-3'-isopropyl-cyclopentadienyl)-4,6-dimethyl-6-phenyl-(η⁵-4,5-tetrahydropentalen)]-dichlorozirconium
[4-(η⁵-3'-Benzyl-cyclopentadienyl)-4,6-dimethyl-6-phenyl-(η⁵-4,5-tetrahydropentalen)]-dichlorozirconium

[4-(η⁵-3'-Methyl-cyclopentadienyl)-2-methyl-(η⁵-4,5-tetrahydropentalen)]-dichlorozirconium
[4-(η⁵-3'-isopropyl-cyclopentadienyl)-2-isopropyl-(η⁵-4,5-tetrahydropentalen)]-dichlorozirconium
[4-(η⁵-3'-Benzyl-cyclopentadienyl)-2-benzyl-(η⁵-4,5-tetrahydropentalen)]-dichlorozirconium

[4-(η⁵-3'-isopropyl-cyclopentadienyl)-2-benzyl-(η⁵-4,5-tetrahydropentalen)]-dichlorozirconium
[4-(η⁵-3'-benzyl-cyclopentadienyl)-2-isopropyl-(η⁵-4,5-tetrahydropentalen)]-dichlorozirconium

[4-(η⁵-3'-Methyl-cyclopentadienyl)-2,4-dimethyl-(η⁵-4,5-tetrahydropentalen)]-dichlorozirconium
[4-(η⁵-3'-isopropyl-cyclopentadienyl)-2-isopropyl-4-methyl-(η⁵-4,5-tetrahydropentalen)]-dichl orozirconium
[4-(η⁵-3'-Benzyl-cyclopentadienyl)-2-benzyl-4-methyl-(η⁵-4,5-tetrahydropentalen)]-dichlorozirconium
[4-(η⁵-3'-isopropyl-cyclopentadienyl)-2-benzyl-4-methyl-(η⁵-4,5-tetrahydropentalen)]-dichlorozirconium
[4-(η⁵-3'-benzyl-cyclopentadienyl)-2-isopropyl-4-methyl-(η⁵-4,5-tetrahydropentalen)]-dichlorozirconium

Die Benennung der voranstehend genannten erfindungsgemäßen Verbindungen soll anhand der Verbindung [4-(η⁵-3'-Isopropyl-cyclopentadienyl)-6-phenyl-(η⁵-4,5-tetrahydropentalen)]-dichlorozirconium veranschaulicht werden.

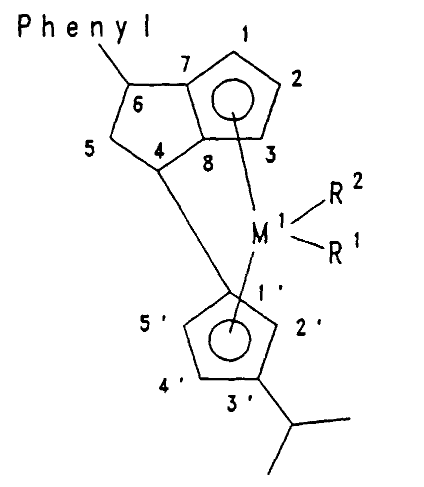

Die Herstellung der erfindungsgemäßen Metallocene soll durch das nachfolgende Reaktionsschema anhand von Metallocenen der Formel VI veranschaulicht werden. Dabei bedeutet M⁴ ein Metall der Hauptgruppe la, IIa oder IIIa des Periodensystems der Elemente, Hal ist ein Halogenatom, die Reste R³-R¹¹, R¹³ und R¹⁴ haben die gleiche Bedeutung wie in Formel I und R¹² ist Wasserstoff.

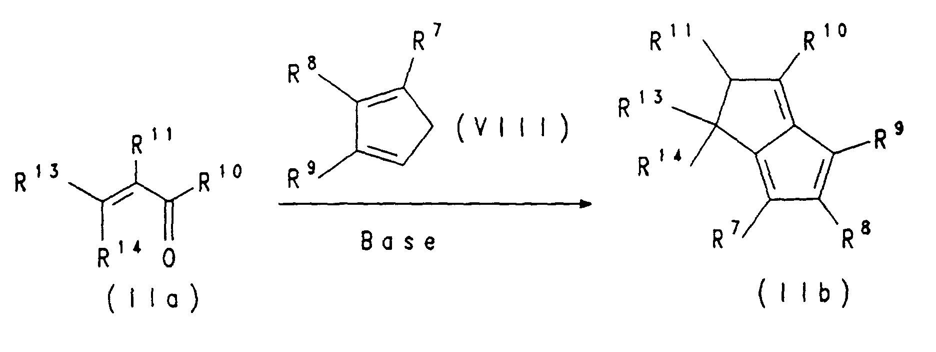

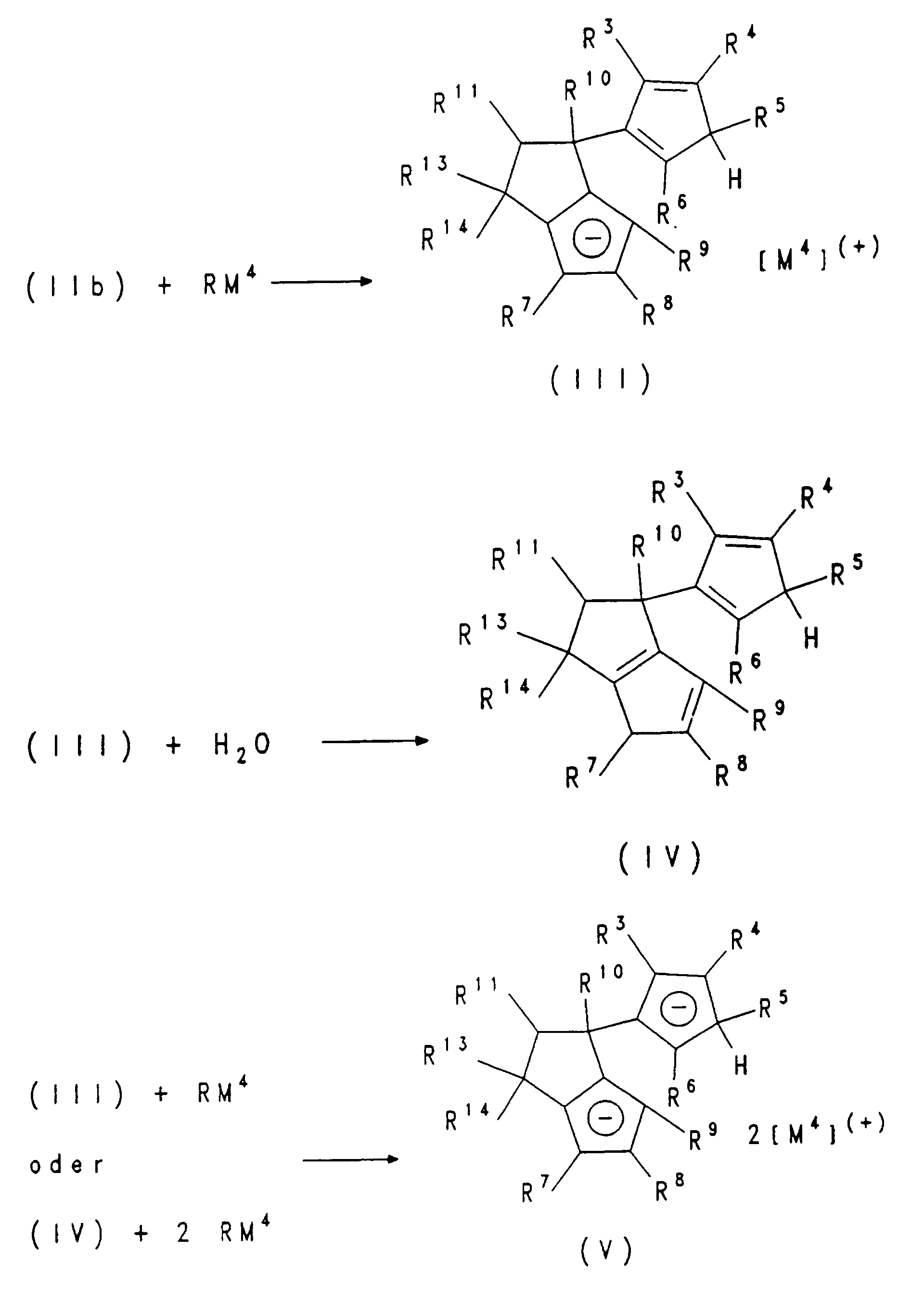

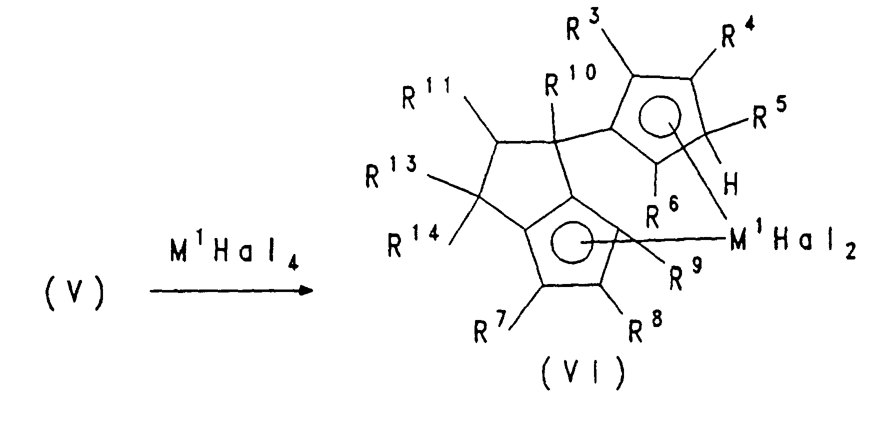

Die Verbindungen der Formel IIb können aus α,β-ungesättigten Ketonen (Chem. Ber. 123, 549 (1990), J. Org. Chem. 54, 4981 (1989)) nach literaturbekannten Methoden hergestellt werden.

Die Umsetzung der Verbindung der Formel IIb zu dem Ligandsystem III erfolgt durch Umsetzung mit einer Verbindung RM⁴, die eine metallorganische Verbindung (z.B. Cyclopentadienyllithium, Indenyllithium, Fluorenyllithium) oder ein Grignardreagenz (z.B. Cyclopentadienyl MgHal, Indenyl MgHal, Fluorenyl MgHal) sein kann.

Die Salze der Formel III können direkt zu den entsprechenden Dianion-Verbindungen der Formel V durch Deprotonierung mit beispielsweise Butyllithium umgesetzt werden. Die Hydrolyse von Verbindung III führt zur Bildung der Biscyclopentadien-Verbindung IV, welche als Konstitutionsisomerengemisch anfällt und chromatographisch gereinigt werden kann. Durch zweifache Deprotonierung von IV mit beispielsweise Butyllithium wird die Dianion-Verbindung der Formel V gebildet, die mit M¹Hal₄ zu dem Metallocen der Formel VI umgesetzt wird.

Metallocene der Formel VI können mit Organometallverbindungen wie Grignard-Reagenzien oder Kohlenwasserstoff-Lithium-Reagenzien zu Metallocenen der Formel I umgesetzt werden, in denen R¹ und R² ungleich Halogen sind. Die Umsetzung zu den verbrückten Metallocenen der Formel VI sowie die Isolierung der gewünschten Komplexe ist im Prinzip bekannt. Hierzu wird das Dianion der Formel V in einem inerten Lösungsmittel mit dem entsprechenden Metallhalogenid wie z.B. Zirkoniumtetrachlorid umgesetzt. Die Metallocene der Formel VI können auch direkt aus den Difulvenen der Formel II ohne Isolierung der Zwischenstufen synthetisiert werden.

Geeignete Lösungsmittel sind aliphatische oder aromatische Lösemittel, wie beispielsweise Hexan oder Toluol, etherische Lösemittel, wie beispielsweise Tetrahydrofuran oder Diethylether oder halogenierte Kohlenwasserstoffe, wie beispielsweise Methylenchlorid oder halogenierte aromatische Kohlenwasserstoffe wie beispielsweise o-Dichlorbenzol.

Eine weitere Möglichkeit zur Darstellung der erfindungsgemäßen Metallocenverbindungen besteht in der Reaktion des Ligandvorläufers VII mit dem Cyclopentadien VIII, welche beide jeweils nach literaturbekannten Vorschriften hergestellt werden können. Die Verbindungen IX können nach einer in der Literatur bekannten Vorschrift thermisch zu den Ligandvorläufern X cyclisiert werden (Chem. Ber. 120, 1611 (1987)). Die Umsetzung von X zu XI erfolgt mit einer organometallischen Verbindung (wie z.B. Cyclopentadienyllithium, Indenyllithium, Fluorenyllithium) oder Grignardreagenzien.

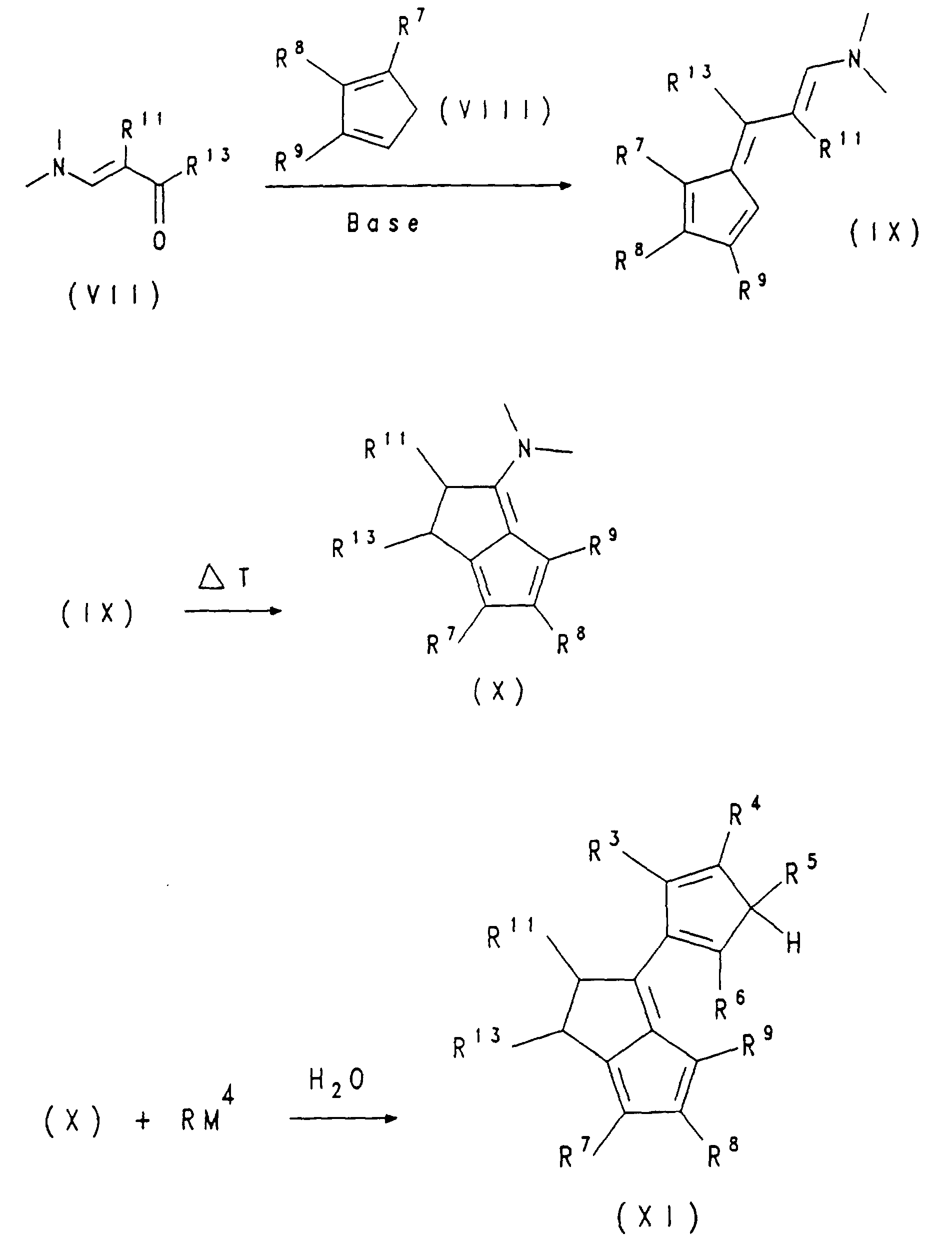

Die Dianionverbindung der Formel Va kann direkt durch Umsetzung von X mit einem metallorganischen Reagenz erhalten werden (wie z.B. Phenyllithium, Methyllithium, n-Butyllithium oder Grignardreagenzien). Die Hydrolyse von Va mit Wasser führt zur Generierung der Ligandvorläufer IV.

Die Umsetzung zu den verbrückten Metallocenen der Formel VIa sowie die Isolierung der gewünschten Komplexe ist im Prinzip bekannt. Hierzu wird das Dianion der Formel Va in einem inertem Lösungsmittel mit dem entsprechenden Metallhalogenid wie z.B. Zirkoniumtetrachlorid umgesetzt. Die Metallocene der Formel VIa können auch direkt aus den Fulvenen der Struktur X ohne Isolierung der Zwischenstufen synthetisiert werden.

Geeignete Lösungsmittel sind aliphatische oder aromatische Lösemittel, wie beispielsweise Hexan oder Toluol, etherische Lösungsmittel, wie beispielsweise Tetrahydrofuran oder Diethylether oder halogenierte Kohlenwasserstoffe, wei beispielsweise Methylenchlorid oder halogenierte aromatische Kohlenwasserstoffe wie beispielsweise o-Dichlorbenzol.

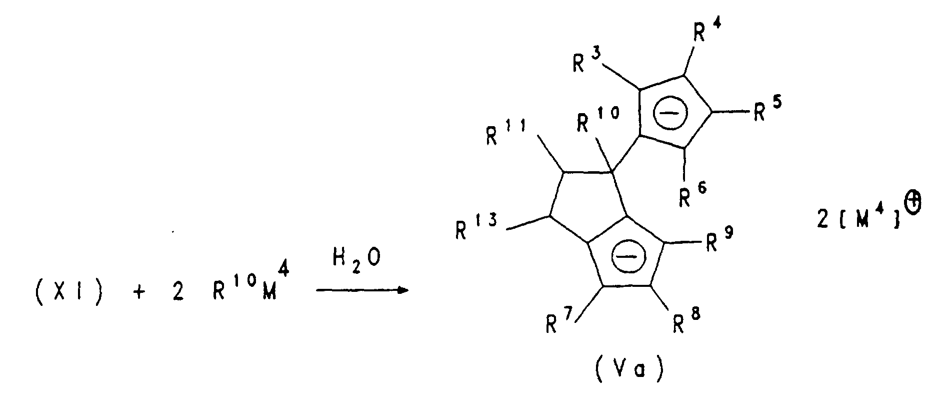

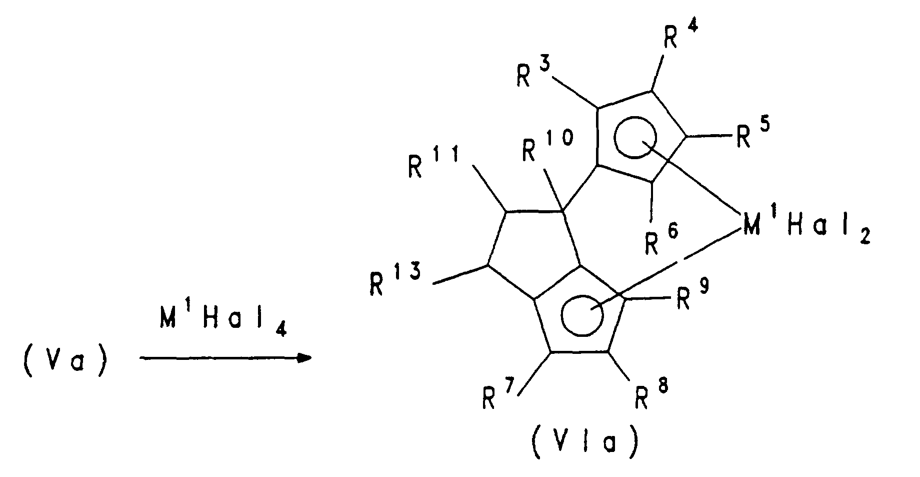

Biscyclopentadienyl-Verbindungen der Formel IV, bei welchen mindestens einer der Reste R³ bis R⁶ sowie mindestens einer der Reste R⁷ bis R⁹ Wasserstoff ist, und mindestens einer der Reste R³ bis R⁹ von Wasserstoff verschieden ist, können durch literaturbekannte Methoden zu den Fulvenen der Formel IVb bzw. IVc umgesetzt werden. Dies soll durch das nachfolgende Reaktionsschema veanschaulicht werden, wobei R¹⁶, R¹⁷, R¹⁹ und R²⁰ gleich oder verschieden sind und wie R¹⁰ definiert sind.

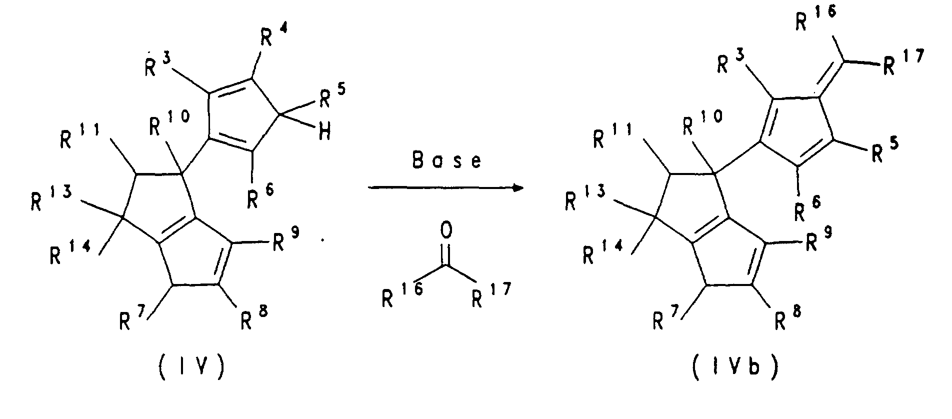

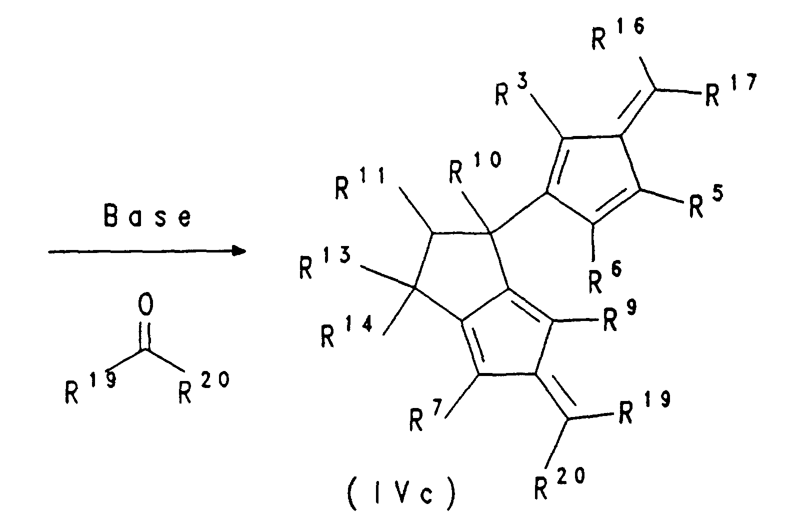

Durch Umsetzung des Fulvens IVb mit metallorganischen Verbindungen der Formel R¹⁸M⁵ (wobei R¹⁶, R¹⁷, R¹⁸, R¹⁹ und R²⁰ gleich oder verschieden sind und wie R¹⁰ definiert sind; M⁵ wie M⁴ definiert ist) führt zur Bildung der Monoanion-Verbindung III. Die Verwendung von zwei Äquivalenten R¹⁸M⁵ führt direkt zur Bildung der Dianion-Verbindung Vb.

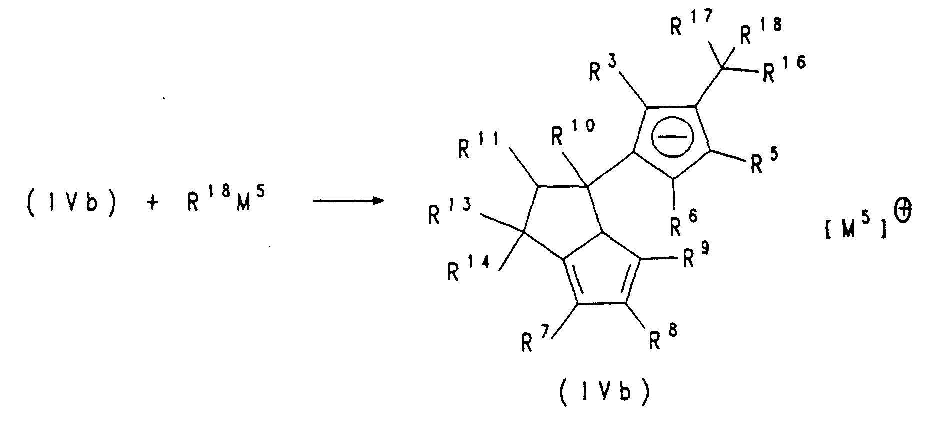

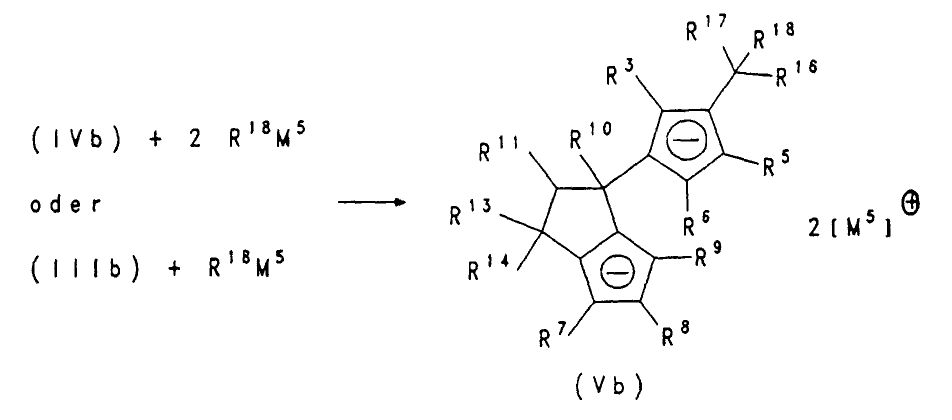

Die Umsetzung des Fulvens IVc führt entsprechend der Umsetzung von IVa zur Bildung der Dianionverbindung Vc.

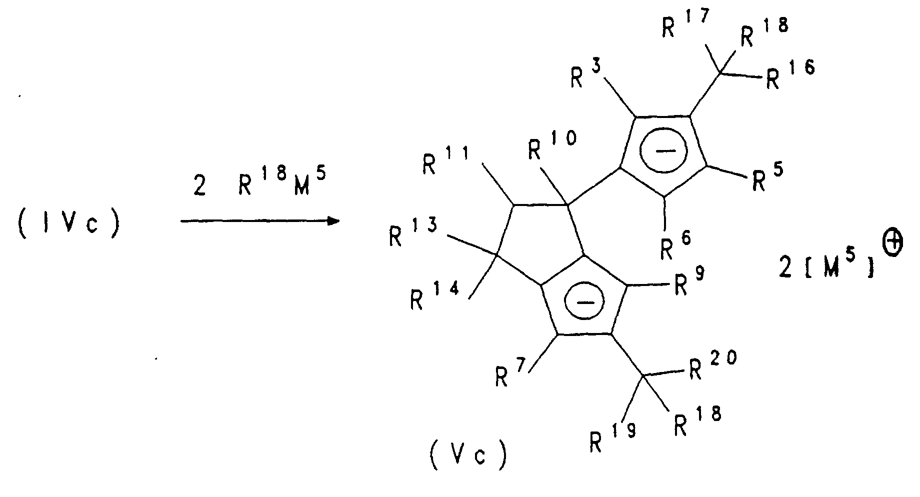

Die Biscyclopentadienyl-Anionen der Formel V, können mit Verbindungen R²¹ₚM⁶X umgesetzt werden, worin
- M⁶: ein Element der III.-V. Hauptgruppe ist,
- X: eine Abgangsgruppe wie Halogen, Tosylat, Triflat ist,
- R²¹: wie R¹⁰ definiert ist, und
- p: eine ganze Zahl von 1 bis 5 ist.

Dies soll durch das nachfolgende Reaktionsschema veranschaulicht werden:

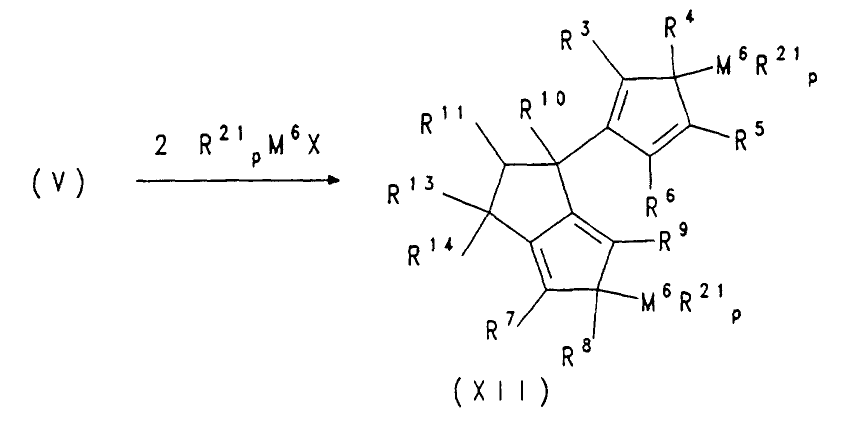

Die Verbindungen der Formel XII, bei welchen mindestens einer der Reste R³ bis R⁶ sowie mindestens einer der Reste R⁷ bis R⁹ Wasserstoff ist, können zu den erfindungsgemäßen Metallocenen umgesetzt werden.
R¹² ist in den Verbindungen der Formeln IIb, III, IV, V, VI, X, XI, Va, VIa, IVb, IVc, Vb, Vc und XII gleich Wasserstoff. R¹⁴ ist in den Verbindungen der Formeln X, XI, Va und VIa gleich Wasserstoff. Die Salze der Formel IIIb können direkt zu den entsprechenden Dianion-Verbindungen der Formel Va durch Deprotonierung mit beispielsweise Butyllithium umgesetzt werden. Die Umsetzung zu den verbrückten Metallocenen der Formel I erfolgt entsprechend der Reaktion von V nach VI.

Die erfindungsgemäßen Metallocene sind hochaktive Katalysatorkomponenten für die Olefinpolymerisation. Je nach Substitutionsmuster der Liganden können die Metallocene als Isomerengemisch anfallen. Die Metallocene werden bevorzugt isomerenrein eingesetzt. Die Verwendung des Racemats ist in den meisten Fällen ausreichend.

Verwendet werden kann aber auch das reine Enantiomere in der (+)- oder (-)-Form. Mit den reinen Enantiomeren ist ein optisch aktives Polymer herstellbar. Getrennt werden sollten jedoch die konfigurationsisomeren Formen der Metallocene, da das polymerisationsaktive Zentrum (das Metallatom) in diesen Verbindungen ein Polymer mit anderen Eigenschaften erzeugt. Für bestimmte Anwendungen, beispielsweise weiche Formkörper, kann dies durchaus wünschenswert sein.

Die vorliegende Erfindung betrifft außerdem ein Verfahren zur Herstellung eines Polyolefins durch Polymerisation mindestens eines Olefins in Gegenwart eines Katalysators der mindestens einen Cokatalysator und mindestens eine stereorigide Metallocenverbindung enthält, die als Liganden mindestens zwei Cyclopentadienylgruppen aufweist, die über einen Fünfring miteinander verbunden sind, wobei mindestens eine Cyclopentadienylgruppe an den verbindenden Fünfring anelliert ist. Unter dem Begriff Polymerisation wird eine Homopolymerisation wie auch eine Copolymerisation verstanden.

Bei der Bestimmung der Anzahl der Ringatome des verbindenden Fünfrings der in dem erfindungsgemäßen Verfahren eingesetzten Metallocenverbindung werden diejenigen Kohlenstoffatome der an den verbindenden Fünfring anellierten Cyclopentadienylgruppe mitgezählt, welche aufgrund der Anellierung Teile des verbindenden Fünfrings sind. Mögliche Substituenten an dem verbindenden Fünfring werden hierbei nicht mitgezählt.

Bevorzugt befindet sich bei der in dem erfindungsgemäßen Verfahren eingesetzten Metallocenverbindung eine Cyclopentadienylgruppe als Substituent an dem verbindenden Fünfring (d. h., die Cyclopentadienylgruppe ist über eine kovalente Bindung an den verbindenden Fünfring gebunden), während eine weitere Cyclopentadienylgruppe an den verbindenden Fünfring annelliert ist. Die an den verbindenden Fünfring anellierte Cyclopentadienylgruppe ist erfindungsgemäß unsubstituiert.

Bevorzugt werden in dem erfindungsgemäßen Verfahren eines oder mehrere Olefine der Formel R^{a}-CH = CH-R^{b} polymerisiert, worin R^{a} und R^{b} gleich oder verschieden sind und ein Wasserstoffatom oder einen Kohlenwasserstoffrest mit 1 bis 20 C-Atomen, insbesondere 1 bis 10 C-Atomen, bedeuten, und R^{a} und R^{b} zusammen mit den sie verbindenen Atomen einen oder mehrere Ringe bilden können. Beispiele für solche Olefine sind 1-Olefine mit 2 bis 40, bevorzugt 2-10 C-Atomen, wie Ethylen, Propylen, 1-Buten, 1-Penten, 1-Hexen, 4-Methyl-1-penten oder 1-Octen, Styrol, Diene, wie 1,3-Butadien, Isopren, 1,4-Hexadien oder cyclische Olefine.
Bevorzugt werden in dem erfindungsgemäßen Verfahren Ethylen oder Propylen homopolymerisiert, oder Ethylen mit einem oder mehreren acyclischen 1-Olefinen mit 3 bis 20 C-Atomen, wie Propylen, und/oder einem oder mehreren Dienen mit 4 bis 20 C-Atomen, wie 1,3-Butadien, copolymerisiert. Beispiele solcher Copolymere sind Ethylen/Propylen-Copolymere und Ethylen/Propylen/1,4-Hexadien-Copolymere.

Die Polymerisation wird bevorzugt bei einer Temperatur von -60 bis 250°C, besonders bevorzugt 50 bis 200°C, durchgeführt. Der Druck beträgt bevorzugt 0,5 bis 2000 bar, besonders bevorzugt 5 bis 64 bar.

Die Polymerisation kann in Lösung, in Masse, in Suspension oder in der Gasphase, kontinuierlich oder diskontinuierlich, ein- oder mehrstufig durchgeführt werden. Eine bevorzugte Ausführungsform ist die Gasphasen- und Lösungspolymerisation.

Der in dem erfindungsgemäßen Verfahren eingesetzte Katalysator enthält eine Metallocenverbindung gemäß Anspruch 1. Es können auch Mischungen zweier oder mehrerer Metallocenverbindungen eingesetzt werden, z.B. zur Herstellung von Polyolefinen mit breiter oder multimodaler Molmassenverteilung.

Prinzipiell ist als Cokatalysator in dem erfindungsgemäßen Verfahren jede Verbindung geeignet, die aufgrund ihrer Lewis-Acidität das neutrale Metallocen in ein Kation überführen und dieses stabilisieren kann ("labile Koordination"). Darüber hinaus sollte der Cokatalysator oder das aus ihm gebildete Anion keine weiteren Reaktionen mit dem gebildeten Metallocenkation eingehen (EP 427 697). Als Cokatalysator wird bevorzugt eine Aluminiumverbindung und/oder eine Borverbindung verwendet.

Die Borverbindung hat bevorzugt die Formel R²²ₓNH₄₋ₓBR²³₄, R²²ₓPH₄₋ₓBR²³₄, R²²₃CBR²³₄ oder BR²³₃, worin x eine Zahl von 1 bis 4, bevorzugt 3, bedeutet, die Reste R²² gleich oder verschieden, bevorzugt gleich sind, und C₁-C₁₀-Alkyl oder C₆-C₁₈-Aryl sind, oder zwei Reste R²² zusammen mit dem sie verbindenen Atomen einen Ring bilden, und die Reste R²³ gleich oder verschieden, bevorzugt gleich sind, und C₆-C₁₈-Aryl sind, das durch Alkyl, Haloalkyl oder Fluor substituiert sein kann. Insbesondere steht R²² für Ethyl, Propyl, Butyl oder Phenyl und R²³ für Phenyl, Pentafluorphenyl, 3,5-Bistrifluormethylphenyl, Mesityl, Xylyl oder Tolyl (EP 277 003, EP 277 004 und EP 426 638).

Bevorzugt wird als Cokatalysator eine Aluminiumverbindung wie Aluminoxan und/oder ein Aluminiumalkyl eingesetzt.

Besonders bevorzugt wird als Cokatalysator ein Aluminoxan, insbesondere der Formel XIIIa für den linearen Typ und/oder der Formel XIIIb für den cyclischen Typ verwendet, 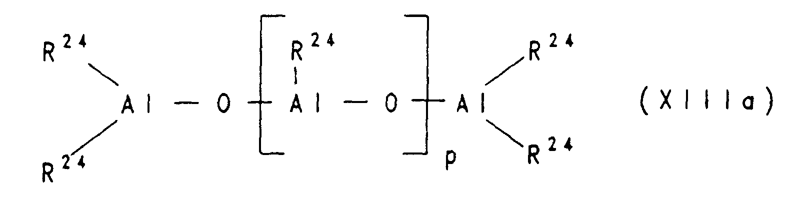 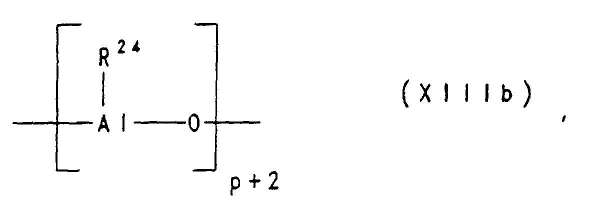 wobei in den Formeln XIIIa und XIIIb die Reste R²⁴ gleich oder verschieden sind und Wasserstoff oder eine C₁-C₂₀-Kohlenwasserstoffgruppe wie eine C₁-C₁₈-Alkylgrupppe, eine C₆-C₁₈-Arylgruppe oder Benzyl bedeuten, und p eine ganze Zahl von 2 bis 50, bevorzugt 10 bis 35 bedeutet.

Bevorzugt sind die Reste R²⁴ gleich und bedeuten Wasserstoff, Methyl, Isobutyl, Phenyl oder Benzyl, besonders bevorzugt Methyl.

Sind die Reste R²⁴ verschieden, so sind sie bevorzugt Methyl und Wasserstoff oder alternativ Methyl und Isobutyl, wobei Wasserstoff oder Isobutyl bevorzugt in einem zahlenmäßigen Anteil von 0,01 bis 40 % (der Reste R²⁴) enthalten sind.

Die Verfahren zur Herstellung der Aluminoxane sind bekannt. Die genaue räumliche Stuktur der Aluminoxane ist nicht bekannt (J. Am. Chem. Soc. (1993) 115, 4971). Beispielsweise ist denkbar, daß sich Ketten und Ringe zu größeren zweidimensionalen oder dreidimensionalen Strukturen verbinden.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, die Metallocenverbindung vor dem Einsatz in der Polymerisationsreaktion mit einem Cokatalysator, insbesondere einem Aluminoxan vorzuaktivieren. Dadurch wird die Polymerisationsaktivität deutlich erhöht. Die Voraktivierung der Metallocenverbindung wird vorzugsweise in Lösung vorgenommen. Bevorzugt wird dabei die Metallocenverbindung in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösungsmenge. Das Metallocen kann in der gleichen Konzentration eingesetzt werden, vorzugsweise wird es jedoch in einer Menge von 10⁻⁴ bis 1 mol pro mol Aluminoxan eingesetzt. Die Voraktivierungsdauer beträgt 5 Minuten bis 60 Stunden, vorzugsweise 5 bis 60 Minuten. Man arbeitet bei einer Temperatur von -78 bis 100°C, vorzugsweise 0 bis 80°C.

Die Metallocenverbindung wird bevorzugt in einer Konzentration, bezogen auf das Übergangsmetall, von 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet. Das Aluminoxan, wird bevorzugt in einer Konzentration von 10⁻⁶ bis 10⁻¹ mol, vorzugsweise 10⁻⁵ bis 10⁻² mol pro dm³ Lösemittel bzw. pro dm³ Reaktorvolumen verwendet. Die anderen genannten Cokatalysatoren werden in etwa äquimolaren Mengen zu der Metallocenverbindung verwendet. Prinzipiell sind aber auch höhere Konzentrationen möglich.

Das Aluminoxan kann auf verschiedene Arten nach bekannten Verfahren hergestellt werden. Eine der Methoden ist beispielsweise, daß eine Aluminiumkohlenwasserstoffverbindung und/oder ein Hydridoaluminiumkohlenwasserstoffverbindung mit Wasser (gasförmig, fest, flüssig oder gebunden - beispielsweise als Kristallwasser) in einem inerten Lösungsmittel (wie beispielsweise Toluol) umgesetzt wird. Zur Herstellung eines Aluminoxans mit verschiedenen Resten R²⁴ werden beispielsweise entsprechend der gewünschten Zusammensetzung zwei verschiedene Aluminiumtrialkyle mit Wasser umgesetzt.

Zur Entfernung von im Olefin vorhandenen Katalysatorgiften ist eine Reinigung mit einer Aluminiumverbindung, bevorzugt einem Aluminiumalkyl, wie Trimethylaluminium oder Triethylaluminium, vorteilhaft. Diese Reinigung kann sowohl im Polymerisationssystem selbst erfolgen, oder das Olefin wird vor der Zugabe in das Polymerisationssystem mit der Aluminiumverbindung in Kontakt gebracht und anschließend wieder abgetrennt.

Als Molmassenregler und/oder zur Steigerung der Katalysatoraktivität kann in dem erfindungsgemäßen Verfahren Wasserstoff zugegeben werden. Hierdurch können niedermolekulare Polyolefine wie Wachse erhalten werden.

Bevorzugt wird in dem erfindungsgemäßen Verfahren die Metallocenverbindung mit dem Cokatalysator außerhalb des Polymerisationsreaktors in einem separaten Schritt unter Verwendung eines geeigneten Lösemittels umgesetzt. Dabei kann eine Trägerung vorgenommen werden.

Im dem erfindungsgemäßen Verfahren kann mit Hilfe der Metallocenverbindung eine Vorpolymerisation erfolgen. Zur Vorpolymerisation wird bevorzugt das (oder eines der) in der Polymerisation eingesetzte(n) Olefin(e) verwendet.

Der in dem erfindungsgemäßen Verfahren eingesetzte Katalysator kann geträgert sein. Durch die Trägerung läßt sich beispielsweise die Kornmorphologie des hergestellten Polyolefins steuern. Dabei kann die Metallocenverbindung zunächst mit dem Träger und anschließend mit dem Cokatalysator umgesetzt werden. Es kann auch zunächst der Cokatalysator geträgert werden und anschließend mit der Metallocenverbindung umgesetzt werden. Auch ist es möglich das Reaktionsprodukt von Metallocenverbindung und Cokatalysator zu trägern. Geeignete Trägermaterialien sind beispielsweise Silikagele, Aluminiumoxide, festes Aluminoxan oder andere anorganische Trägermaterialien wie beispielsweise Magnesiumchlorid. Ein geeignetes Trägermaterial ist auch ein Polyolefinpulver in feinverteilter Form. Die Herstellung des geträgerten Cokatalysators kann beispielsweise wie in EP 567 952 beschrieben durchgeführt werden.

Vorzugsweise wird der Cokatalysator, z.B. Aluminoxan, auf einen Träger wie beispielsweise Silikagele, Aluminiumoxide, festes Aluminoxan, andere anorganische Trägermaterialien oder auch ein Polyolefinpulver in feinverteilter Form aufgebracht und dann mit dem Metallocen umgesetzt.

Als anorganische Träger können Oxide eingesetzt werden, die flammenpyrolytisch durch Verbrennung von Element-Halogeniden in einer Knallgas-Flamme erzeugt wurden, oder als Kieselgele in bestimmten Korngrößen-Verteilungen und Kornformen herstellbar sind.

Die Herstellung des geträgerten Cokatalysators kann beispielsweise wie in EP 578 838 beschrieben in der folgenden Weise in einem Edelstahl-Reaktor in explosionsgeschützter Ausführung mit einem Umpumpsystem der Druckstufe 60 bar, mit Inertgasversorgung, Temperierung durch Mantelkühlung und zweitem Kühlkreislauf über einen Wärmetauscher am Umpumpsystem erfolgen. Das Umpumpsystem saugt den Reaktorinhalt über einen Anschluß im Reaktorboden mit einer Pumpe an und drückt ihn in einen Mischer und durch eine Steigleitung über einen Wärmetauscher in den Reaktor zurück. Der Mischer ist so gestaltet, daß sich in dem Zulauf ein verengter Rohrquerschnitt befindet, wo eine erhöhte Strömungsgeschwindigkeit entsteht, und in dessen Turbulenzzone axial und entgegen der Strömungsrichtung eine dünne Zuleitung geführt ist, durch welche - getaktet - jeweils eine definierte Menge Wasser unter 40 bar Argon eingespeist werden kann. Die Kontrolle der Reaktion erfolgt über einen Probennehmer am Umpumpkreislauf.

Im Prinzip sind jedoch auch andere Reaktoren geeignet.

Im vorstehend beschriebenen Reaktor mit 16 dm³ Volumen werden 5 dm³ Decan unter Inertbedingungen vorgelegt. 0,5 dm³ (= 5,2 mol) Trimethylaluminium werden bei 25°C zugefügt. Danach werden 250 g Kieselgel SD 3216-30 (Grace AG), welche vorher bei 120°C in einem Argonfließbett getrocknet wurden, durch einen Feststofftrichter in den Reaktor eindosiert und mit Hilfe des Rührers und des Umpumpsystems homogen verteilt. Eine Gesamtmenge von 76,5 g Wasser wird in Portionen von 0,1 cm³ während 3,25 Stunden jeweils alle 15 Sekungen in den Reaktor gegeben. Der Druck, herrührend vom Argon und den entwickelten Gasen, wird durch ein Druckregelventil konstant bei 10 bar gehalten. Nachdem alles Wasser eingebracht worden ist, wird das Umpumpsystem abgeschaltet und das Rühren noch 5 Stunden bei 25°C fortgesetzt.

Der in dieser Weise hergestellte geträgerte Cokatalysator wird als eine 10 %ige Suspension in n-Decan eingesetzt. Der Aluminiumgehalt ist 1,06 mmol Al pro cm³ Suspension. Der isolierte Feststoff enthält 31 Gew.-% Aluminium, das Suspensionsmittel enthält 0,1 Gew.-% Aluminium.

Weitere Möglichkeiten der Herstellung eines geträgerten Cokatalysators sind in EP 578 838 beschrieben.

Danach wird das erfindungsgemäße Metallocen auf den geträgerten Cokatalysator aufgebracht, indem das gelöste Metallocen mit dem geträgerten Cokatalysator gerührt wird. Das Lösemittel wird entfernt und durch einen Kohlenwasserstoff ersetzt, in dem sowohl Cokatalysator als auch das Metallocen unlöslich sind.

Die Reaktion zu dem geträgerten Katalysatorsystem erfolgt bei einer Temperatur von -20 bis + 120°C, bevorzugt 0 bis 100°C, besonders bevorzugt bei 15 bis 40°C. Das Metallocen wird mit dem geträgerten Cokatalysator in der Weise umgesetzt, daß der Cokatalysator als Suspension mit 1 bis 40 Gew.-%, bevorzugt mit 5 bis 20 Gew.-% in einem aliphatischen, inerten Suspensionsmittel wie n-Decan, Hexan, Heptan, Dieselöl mit einer Lösung des Metallocens in einem inerten Lösungsmittel wie Toluol, Hexan, Heptan, Dichlormethan oder mit dem feingemahlenen Feststoff des Metallocens zusammengebracht wird. Umgekehrt kann auch eine Lösung des Metallocens mit dem Feststoff des Cokatalysators umgesetzt werden.

Die Umsetzung erfolgt durch intensives Mischen, beispielsweise durch Verrühren bei einem molaren Al/M¹-Verhältnis von 100/1 bis 10000/1, bevorzugt von 100/1 bis 3000/1 sowie einer Reaktionszeit von 5 bis 120 Minuten, bevorzugt 10 bis 60 Minuten, besonders bevorzugt 10 bis 30 Minuten unter inerten Bedingungen.
Im Laufe der Reaktionszeit zur Herstellung des geträgerten Katalysatorsystems treten insbesondere bei der Verwendung der erfindungsgemäßen Metallocene mit Absorptionsmaxima im sichtbaren Bereich Veränderungen in der Farbe der Reaktionsmischung auf, an deren Verlauf sich der Fortgang der Reaktion verfolgen läßt.

Nach Ablauf der Reaktionszeit wird die überstehende Lösung abgetrennt, beispielsweise durch Filtration oder Dekantieren. Der zurückbleibende Feststoff wird 1- bis 5-mal mit einem inerten Suspensionsmittel wie Toluol, n-Decan, Hexan, Dieselöl, Dichlormethan zur Entfernung löslicher Bestandteile im gebildeten Katalysator, insbesondere zur Entfernung von nicht umgesetzten und damit löslichem Metallocen, gewaschen.

Das so hergestellte geträgerte Katalysatorsystem kann im Vakuum getrocknet als Pulver oder noch Lösemittel behaftet wieder resuspendiert und als Suspension in einem der vorgenannten inerten Suspensionsmittel in das Polymerisationssystem eindosiert werden.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Propan, Butan, Hexan, Heptan, Isooctan, Cyclohexan, Methylcyclohexan, genannt. Weiterhin kann eine Benzin- bzw. hydrierte Dieselölfraktion benutzt werden. Brauchbar ist auch Toluol. Bevorzugt wird im flüssigen Monomeren polymerisiert.

Vor der Zugabe des Katalysators, insbesondere des geträgerten Katalysatorsystems (enthaltend das erfindungsgemäße Metallocen und einen geträgerten Cokatalysator) kann zusätzlich eine andere Aluminiumalkylverbindung wie beispielsweise Trimethylaluminium, Triethylaluminium, Triisobutylaluminium, Trioctylaluminium oder Isoprenylaluminium zur Inertisierung des Polymerisationssystems (beispielsweise zur Abtrennung vorhander Katalysatorgifte im Olefin) in den Reaktor gegeben werden. Diese wird in einer Konzentration von 100 bis 0,01 mmol Al pro kg Reaktorinhalt dem Polymerisationssystem zugesetzt. Bevorzugt werden Triisobutylaluminium und Triethylaluminium in einer Konzentration von 10 bis 0,1 mmol Al pro kg Reaktorinhalt. Dadurch kann bei der Synthese eines geträgerten Katalysatorsystems das molare Al/M¹-Verhältnis klein gewählt werden.

Werden inerte Lösemittel verwendet, werden die Monomeren gasförmig oder flüssig zudosiert.

Die Dauer der Polymerisation ist beliebig, da das in dem erfindungsgemäßen Verfahren zu verwendende Katalysatorsystem einen nur geringen zeitabhängigen Abfall der Polymerisationsaktivität zeigt.

Die in der vorliegenden Erfindung beschriebenen speziellen stereorigiden Metallocenverbindungen eignen sich zur Herstellung von Polyolefinen, insbesondere solchen mit reduzierter Kristallinität, erhöhter Schlagzähigkeit, erhöhter Transparenz, hoher Fließfähigkeit bei Verarbeitungstemperatur sowie reduziertem Schmelzpunkt.

Anwendungsschwerpunkte solcher Polyolefine sind Weichmacher- und Gleitmittelrezepturen, Schmelzkleberanwendungen, Beschichtungen, Abdichtungen, Isolierungen, Ausgießmassen oder Schalldämmungsmaterialien.

Durch Anwendung von Wasserstoff oder durch Erhöhung der Polymerisationstemperatur sind auch Polyolefine niedriger Molmasse, wie Wachse zugänglich, deren Härte oder Schmelzpunkt durch den Comonomergehalt variiert werden können.

Umgekehrt lassen sich durch Wahl der Polymerisationsbedingungen auch hochmolekulare Polyolefine herstellen, welche als thermoplastische Werkstoffe geeignet sind. Diese sind insbesondere zur Herstellung von Formkörpern wie Folien, Platten oder Großhohlkörpern (z.B. Rohre) geeignet.

Durch Wahl des Polymerisations-Verfahrens und der Comonomerart(en), sowie Comonomermenge(n) lassen sich Olefincopolymere mit elastomeren Eigenschaften wie z.B. Ethylen/Propylen/1,4-Hexadien-Terpolymere herstellen.

Die nachfolgenden Beispiele dienen zur näheren Erläuterung der Erfindung.

Herstellung und Handhabung organometallischer Verbindungen erfolgten unter Ausschluß von Luft und Feuchtigkeit unter Argon-Schutzgas (Schlenk-Technik).

Alle benötigten Lösungsmittel wurden vor Gebrauch durch mehrstündiges Sieden über einem geeigneten Trockenmittel und anschließende Destillation unter Argon absolutiert.

Die Herstellung der als Ausgangsverbindungen eingesetzten α,β-ungesättigten Ketone und Fulvene erfolgte nach literaturbekannten Methoden (Synlett 771 (1991); J. Chem. Soc., Commun. 1694 (1986); Chem. Ber. 116, 119 (1983); Tetrahedron Lett. 23; 1447 (1982)), Cyclopentadien und Methylcyclopentadien wurden durch Cracken der Dimeren gewonnen und bei -35°C gelagert.

Die Ermittelung des Al/CH₃-Verhältnisses im Aluminoxan erfolgte durch Zersetzung der Probe mit H₂SO₄ und Bestimmung des Volumens der entstehenden Hydrolysegase unter Normalbedingungen sowie durch komplexometrische Titration des Aluminiums in der dann ganz gelösten Probe nach Schwarzenbach.

Die Verbindungen wurden mit ¹H-NMR, ¹³C-NMR- und IR-Spektroskopie charakterisiert.

Die angegebenen Polymerschmelzpunkte und Schmelzwärmen sind einer DSC-Messung für 2. Aufschmelzen bei einer Aufheizrate von 10°/min entnommen.

Toluol lösliches Methylaluminoxan wird für Vergleichsbeispiele als 10%ige Toluol Lösung von der Fa. Witco bezogen und enthält gemäß Aluminium-Bestimmung 36 mg Al/ml.

Die Bestimmung des Comonomer-Einbaus erfolgt mit ¹³C-NMR gemäß der Methode von Randall (Macromolecules 27, 2120 (1994)).

Es bedeuten:
- VZ =: Viskositätszahl in cm³/g
- Mw =: Molmassengewichtsmittel in g/mol (ermittelt durch Gelpermeationschromatographie)
- Mw/Mn =: Molmassendispersität
- Schmp. =: Schmelzpunkt in °C (ermittelt mit DSC, 20°C/min Aufheiz-/Abkühlgeschwindigkeit)
- II =: Isotaktischer Index (II = mm + 1/2 mr, ermittelt durch 13C-NMR-Spektroskopie
- MFI 230/5 =: Schmelzindex, gemessen nach DIN 53735; in dg/min
- SD =: Polymerschüttdichte in g/dm³

### A. [4-(h⁵-Indenyl)-4-methyl-6-phenyl-(h⁵-4,5-tetrahydropentalen)]-dichlorozirconium

### 1. 4-Methyl-6-phenyl-5,6-dihydropentalen

Zu einer Mischung aus 35,0 g (239 mmol) Benzalaceton und 38,1 g (717 mmol) Cyclopentadien in 300 ml Methanol werden bei 0°C innerhalb von 45 Minuten 208 g (359 mmol) Pyrrolidin getropft. Die rote Reaktionslösung wird 40 Minuten bei Raumtemperatur gerührt und anschließend bei 0°C mit 19 g (346 mmol) Eisessig versetzt. Nach Zugabe von 300 ml Wasser und 500 ml Diethylether wird das Produkt extrahiert. Die wäßrige Phase wird zweimal mit jeweils 250 ml Diethylether extrahiert, die vereinigten etherischen Phasen werden über MgSO4 getrocknet und das Lösungsmittel im Vakuum entfernt. Das Rohprodukt wird im Ölpumpenvakuum destilliert und man erhält 24,1 g (52%) 4-Methyl-6-phenyl-5,6-dihydropentalen.

### 2. 4-Indenyl-4-methyl-6-phenyl-4,5-tetrahydropentalen

Zu einer Lösung von 20,0 g (103 mmol) 4-Methyl-6-phenyl-5,6-dihydropentalen in 75 ml Tetrahydrofuran wird bei Raumtemperatur eine Lösung von 12,6 g (103 mmol) Indenyllithium in 40 ml Tetrahydrofuran getropft. Die Reaktionslösung wird 24 Stunden bei Raumtemperatur gerührt und anschließend noch 6 Stunden refluxiert. Durch Zugabe von Wasser wird die Reaktion abgebrochen. Das Produkt wird mit Diethylether extrahiert, die wäßrige Phase zweimal mit je 50 ml Diethylether gewaschen und die vereinigten organischen Phasen über MgSO4 getrocknet. Nach Entfernen des Lösungsmittels im Vakuum und anschließender Chromatographie (Laufmittel: Hexan/Dichlormethan: 20/1) erhä!t man 17,5 g (55%) 4-Indenyl-4-methyl-6-phenyl-4,5-tetrahydropentalen.

¹H-NMR (200 MHz, CDCl₃): 8.4 - 7.3 (m, 9H, arom. H), 6.8 - 5.9 (m, 4H, H-C(2'), H-C(1-3)), 3.4 - 3.2 (m, 2H, H-C(4), H-C(7)), 2.4 - 1.8 (m, 5H, H-C(3'), H-C(5), H-C(6)), 1.6 (s, 3H, CH₃).

### 3. [4-(η⁵-Indenyl)-4-methyl-6-phenyl-(η⁵-4,5-tetrahydropentalen)]-dichlorozirconium

Zu einer Lösung von 10.5 g (34 mmol) 4-Indenyl-6-phenyl-4,5-tetrahydropentalen in 50 ml Tetrahydrofuran werden 42.5 ml (68 mmol) einer 1.6 molaren Butyllithiumlösung in Hexan getropft. Die Lösung wird für weitere 3 Stunden gerührt, anschließend auf -78°C abgekühlt und protionsweise mit 4.1 g (17 mmol) Zirkoniumtetrachlorid versetzt. Die Lösung wird 24 Stunden gerührt und anschließend das Lösungsmittel im Vakuum entfernt. Das Produkt wird mit 125 ml Dichlormethan extrahiert, die Lösung bis auf ein Volumen von 25 ml eingeengt und 4.4 g (55%) [4-(η⁵-Indenyl)-4-methyl-6-phenyl-(η⁵-4,5-tetrahydropentalen)]-dichlorozirconium in Form eines gelben Pulvers erhalten.

¹H-NMR (200 MHz, CDCl₃): 8.3 - 7.2 (m, 9H, arom. H), 6.8 - 5.7 (m, 5H, H-C(2'), H-C(3'), H-C(1-3)), 3.5 (m, 1H, H-C(4)), 2.2 - 1.9 (m, 3H, H-C(5), H-C(6)), 1.7 (s, 3H, CH₃). Massenspektrum: 468 M +, korrektes Zerfallsmuster.

### C. [4-(η⁵-Indenyl)-(η⁵-4,5-tetrahydropentalen)]-dichlorozirconium

### 1. 4-(Dimethylamino)-5,6-dihydropentalen

Eine Lösung von 20.0 g (136 mmol) (E)-6-[2-(Dimethylamino)-ethenyl]fulven wird in 100 ml Piperidin für 2 h unter Rückfluß gekocht. Das Lösungsmittel wird im Vakuum entfernt und der Rückstand aus Diethyether umkristallisiert. Man erhält 12.5 g (63%) des 4-(Dimethyamino)-5,6-dihydropentalens in Form eines gelben Pulvers.

### 2. 4-Indenyl-5,6-dihydropentalen

Eine Lösung von 12.5 g (85 mmol) 4-(Dimethyamino)-5,6-dihydropentalen in 50 ml Tetrahydrofuran werden mit einer Lösung von 10.4 g (85 mmol) Indenyllithium in 20 ml Tetrahydrofuran versetzt. Die Reaktionslösung wird 24 Stunden bei Raumtemperatur gerührt und die Reaktion durch Zugabe von Wasser beendet. Durch Extraktion mit Diethylether, Trocknung der organischen Phasen über MgSO₄ und Entfernen des Lösungsmittels im Vakuum und anschließender Umkristallisation des Rohproduktes aus Diethylether erhält man 13.9 g (75%) 4-Indenyl-5,6-dihydropentalen.

¹H-NMR (200 MHz, CDCl₃): 7.7 - 7.2 (m, 4H, arom. H), 6.2 - 5.6 (m, 4H, olefin. H), 3.4 - 2.2 (m, 6H, aliphat. H).

### 3. 4-Indenyl-4,5-tetrahydropentalen

Zu einer Suspension von 6.3 g (165 mmol) Lithiumaluminiumhydrid in 150 ml Diethylether wird bei Raumtemperatur eine Lösung von 12.0 g (55 mmol) 4-Indenyl-5,6-dihydropentalen in 40 ml Diethylether getropft. Die orangefarbene Suspension wird drei Stunden unter Rückfluß erhitzt und anschließend auf 0°C abgekühlt. Man hydrolysiert mit Eiswasser, wobei der entstehende, weiße Niederschlag abfiltiert und mehrmals mit wenig Diethylether gewaschen wird. Die vereinigten etherischen Phasen werden über MgSO₄ getrocknet und das Lösungsmittel im Vakuum entfernt. Man erhält 11.5 g (96%) 4-Indenyl-4,5-tetrahydropentalen als gelbes Öl.

¹H-NMR (200 MHz, CDCl₃): 7.6 - 7.1 (m, 4H, arom. H), 6.3 - 5.7 (m, 4H, H-C(1), H-C(2), H-C(3), H-C(2')), 3.4 - 3.2 (m, 2H, H-C(4), H-C(7)), 2.8 - 2.2 (m, 6H, H-C(5), H-C(6), H-C(2')).

### 4. [4-(η⁵-Indenyl)-(η⁵-4,5-tetrahydropentalen)]-dichlorozirconium

Zu einer Lösung von 10.0 g (46 mmol) 4-Indenyl-4,5-tetrahydropentalen in 50 ml Toluol werden 57 ml (92 mmol) einer 1.6 molaren Methyllithiumlösung in Hexan getropft. Die Lösung wird für weitere 3 Stunden gerührt. Die enstandene Suspension wird auf -78°C abgekühlt und anschließend portionsweise mit 5.4 g (23 mmol) Zirkoniumtetrachlorid versetzt. Die Suspension wird 24 Stunden gerührt und anschließend über eine G3-Fritte filtriert. Der Rückstand wird mit 100 ml Toluol nachextrahiert und die vereinigten toluolischen Filtrate im Vakuum vom Lösungsmittel befreit. Man erhält 3.5 g (40%) [4-(η⁵-Indenyl)-(η⁵-4,5-tetrahydropentalen)]-dichlorozirconium in Form eines gelben Pulvers.

¹H-NMR (200 MHz, CDCl₃): 7.5 - 7.1 (m, 4H, arom. H), 6.4 - 5.7 (m, 5H, H-C(1), H-C(2), H-C(3), H-C(2'), H-C(5'), 3.3 (m, 1 H, H-C(4)), 2.8 - 2.2 (m, 4H, H-C(5), H-C(6)). Massenspektrum: 380 M+, korrektes Zerfallsmuster.

## Patentansprüche

1. Stereorigide Metallocenverbindung der Formel I 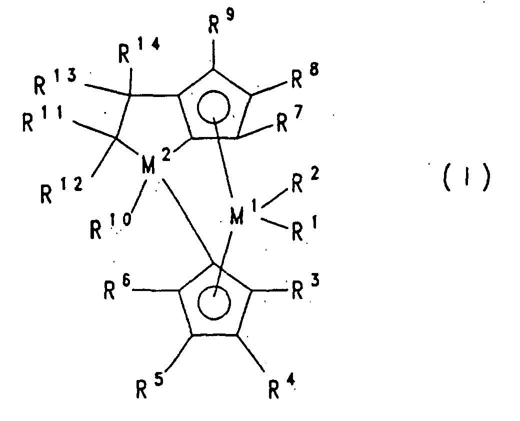 worin
M¹ Titan, Zirkonium oder Hafnium ist,
R¹ und R² gleich sind und eine C₁-C₄-Alkylgruppe oder ein Halogenatom bedeuten,
R³, R⁴, R⁵ und R⁶ gleich oder verschieden sind und ein Wasserstoffatom, eine C₁-C₁₀-Alkylgruppe oder eine C₆-C₂₄-Arylgruppe sind, oder zwei oder mehr benachbarte Reste R³, R⁴, R⁵ und R⁶ zusammen mit den sie verbindenden Atomen ein aromatisches oder aliphatisches kohlenstoffhaltiges Ringsystem mit 4 bis 20 Kohlenstoffatomen bilden,
R⁷, R⁸ und R⁹ gleich Wasserstoff sind,
R¹⁰ ein Wasserstoffatom, eine C₆-C₂₄-Arylgruppe oder eine C₁-C₁₀-Alkylgruppe ist,
M² Kohlenstoff ist,
R¹¹ und R¹² gleich oder verschieden sind, und R¹¹ ein Wasserstoffatom, eine C₁-C₄-Alkylgruppe oder eine C₆-C₁₀-Arylgruppe und R¹² ein Wasserstoffatom sind und
R¹³ und R¹⁴ gleich oder verschieden sind und ein Wasserstoffatom, eine C₁-C₄-Alkylgruppe oder eine C₆-C₁₀-Arylgruppe bedeuten und mindestens einer der Reste R³, R⁵ und R⁶ von Wasserstoff verschieden ist.

2. Katalysator, enthaltend mindestens einen Cokatalysator und mindestens eine stereorigide Metallocenverbindung gemäß Anspruch 1.

3. Katalysator gemäß Anspruch 2, worin der Cokatalysator ein Aluminoxan ist.

4. Katalysator gemäß einem oder mehreren der Anspruch 2 oder 3, zusätzlich enthaltend einen Träger.

5. Verfahren zur Herstellung eines Polyolefins durch Polymerisation mindestens eines Olefins in Gegenwart eines Katalysators gemäß einem oder mehreren der Ansprüche 2 bis 4.

6. Verfahren gemäß Anspruch 5, wobei eines oder mehrere Olefine der Formel R^{a}-CH=CH-R^{b} polymerisiert, worin R^{a} und R^{b} gleich oder verschieden sind und ein Wasserstoffatom oder einen Kohlenwasserstoffrest mit 1 bis 20 C-Atomen bedeuten, und R^{a} und R^{b} zusammen mit den sie verbindenen Atomen einen oder mehrere Ringe bilden können.

7. Verwendung einer stereorigiden Metallocenverbindung gemäß Anspruch 1 zur Olefinpolymerisation.

## Claims

1. A stereorigid metallocene compound of the formula I 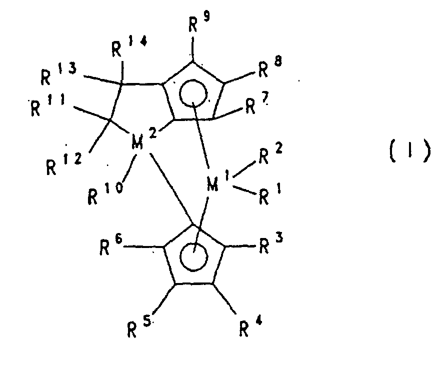 where
M¹ titanium, zirconium or hafnium,
R¹ and R² are identical and are each a C₁-C₄-alkyl group or a halogen atom,
R³, R⁴, R⁵ and R⁶ are identical or different and are each a hydrogen atom, a C₁-C₁₀-alkyl group or a C₆-C₂₄-aryl group, or two or more adjacent radicals R³, R⁴, R⁵ and R⁶ together with the atoms connecting them form an aromatic or aliphatic ring system having from 4 to 20 carbon atoms,
R⁷, R⁸ and R⁹ are each hydrogen,
R¹⁰ is a hydrogen atom, a C₆-C₂₄-aryl group or a C₁-C₁₀-alkyl group,
M² is carbon,
R¹¹ and R¹² are identical or different and R¹¹ is a hydrogen atom, a C₁-C₄-alkyl group or a C₆-C₁₀-aryl group and R¹² is a hydrogen atom and
R¹³ and R¹⁴ are identical or different and are each a hydrogen atom, a C₁-C₄-alkyl group or a C₆-C₁₀-aryl group, and at least one of the radicals R³, R⁵ and R⁶ is different from hydrogen.

2. A catalyst comprising at least one cocatalyst and at least one stereorigid metallocene compound as claimed in claim 1.

3. A catalyst as claimed in claim 2, wherein the cocatalyst is an aluminoxane.

4. A catalyst as claimed in one or both of claims 2 and 3, additionally containing a support.

5. A process for preparing a polyolefin by polymerization of at least one olefin in the presence of a catalyst as claimed in one or more of claims 2 to 4.

6. The process as claimed in claim 5, wherein one or more olefins of the formula R^{a}-CH=CH-R^{b} are polymerized, where R^{a} and R^{b} are identical or different and are each a hydrogen atom or a hydrocarbon radical having from 1 to 20 carbon atoms, and R^{a} and R^{b} together with the atoms connecting them can form one or more rings.

7. Use of a stereorigid metallocene compound as claimed in claim 1 for olefin polymerization.

## Revendications

1. Composé métallocène stéréorigide de formule I 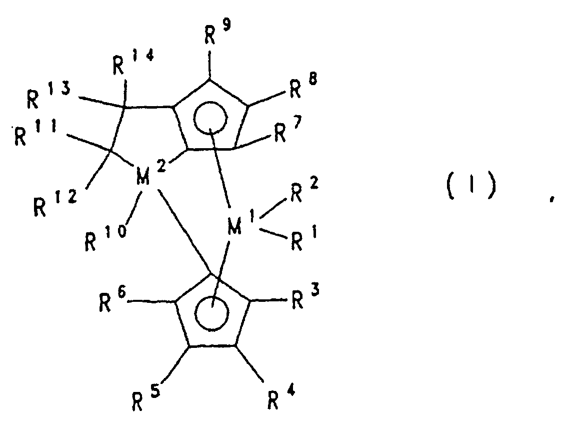 dans laquelle
M¹ est le titane, le zirconium ou l'hafnium,
R¹ et R² sont identiques et représentent un groupe alkyle en C₁-C₄ ou un atome d'halogène,
R³, R⁴, R⁵ et R⁶ sont identiques ou différents et sont un atome d'hydrogène, un groupe alkyle en C₁-C₁₀ ou un groupe aryle en C₆-C₂₄, ou deux ou plus de deux radicaux R³, R⁴, R⁵ et R⁶ contigus forment ensemble avec les atomes qui les relient un système cyclique carboné aromatique ou aliphatique ayant de 4 à 20 atomes de carbone,
R⁷, R⁸ et R⁹ sont des atomes d'hydrogène,
R¹⁰ est un atome d'hydrogène, un groupe aryle en C₆-C₂₄ ou un groupe alkyle en C₁-C₁₀,
M² est un atome de carbone,
R¹¹ et R¹² sont identiques ou différents, et R¹¹ est un atome d'hydrogène, un groupe alkyle en C₁-C₄ ou un groupe aryle en C₆-C₁₀ et R¹² est un atome d'hydrogène, et
R¹³ et R¹⁴ sont identiques ou différents, et représentent un atome d'hydrogène, un groupe alkyle en C₁-C₄ ou un groupe aryle en C₆-C₁₀, et au moins l'un des radicaux R³, R⁵ et R⁶ est différent d'un atome d'hydrogène.

2. Catalyseur contenant au moins un co-catalyseur et au moins un composé métallocène stéréorigide selon la revendication 1.

3. Catalyseur selon la revendication 2, dans lequel le co-catalyseur est un aluminoxane.

4. Catalyseur selon la revendication 2 ou 3, contenant en outre un support.

5. Procédé pour la préparation d'une polyoléfine par polymérisation d'au moins une oléfine en présence d'un catalyseur selon une ou plusieurs des revendications 2 à 4.

6. Procédé selon la revendication 5, dans lequel on polymérise une ou plusieurs oléfines de formule R^{a}-CH=CH-R^{b}, dans laquelle R^{a} et R^{b} sont identiques ou différents et représentent un atome d'hydrogène ou un radical hydrocarboné ayant de 1 à 20 atomes de carbone, et R^{a} et R^{b} peuvent former ensemble avec les atomes qui les relient un ou plusieurs cycles.

7. Utilisation d'un composé métallocène stéréorigide selon la revendication 1, pour la polymérisation d'oléfines.
